Europäisches Patentamt

European Patent Office

Office européen des brevets

(11) Veröffentlichungsnummer: **0 226 654**

**A1**

(12) **EUROPÄISCHE PATENTANMELDUNG**

(21) Anmeldenummer: **85116385.7**

(22) Anmeldetag: **20.12.85**

(51) Int. Cl.⁴: **F16B 7/04**

(43) Veröffentlichungstag der Anmeldung:
**01.07.87 Patentblatt 87/27**

(84) Benannte Vertragsstaaten:
**AT BE DE FR GB IT NL**

(71) Anmelder: **PAN Bausysteme GmbH**
**Drontheimer Strasse 28**
**D-1000 Berlin 65(DE)**

(72) Erfinder: **Presser, Ernst Theo, Ing.**
**Rhumeweg 22**
**D-1000 Berlin 37(DE)**

(74) Vertreter: **Wablat, Wolfgang**
**Patentanwalt Dr.-Ing. Dr. jur. Dipl.-Chem. W.**
**Wablat Potsdamer Chaussee 47**
**D-1000 Berlin 38(DE)**

(54) **Verbinder für Rohre und rohrartige Hohlprofile.**

(57) Die Erfindung betrifft einen Verbinder für Rohre oder rohrartige Hohlprofile, welcher die stumpf aneinanderstoßenden Enden zweier gleichartiger Profile - (8) mittels eines den Profilwänden beider Enden von innen anliegenden Zwischenstückes (4) verbindet. Der Verbinder zeichnet sich dadurch aus, daß das Zwischenstück von mittels einer Führungseinrichtung miteinander verbundenen, in Radialrichtung des Profiles relativ zueinander beweglichen Klemmbacken - (45, 46) gebildet wird, und daß eine mittels eines durch Durchgriffsöffnungen (8c) der Profilwand betätigbaren Schraubgetriebes (7) angetriebene Bewegungseinrichtung zur Einleitung einer Radialbewegung in die Klemmbacken vorgesehen ist.

FIG. 2

## Verbinder für Rohre und rohrartige Hohlprofile

Die Erfindung betrifft einen Verbinder für Rohre oder rohrartige Hohlprofile nach dem Gattungsbegriff von Anspruch 1.

Ein Rohrverbinder dieser Art ist Gegenstand der DE-PS 829 390. Dabei liegt ein aus nachgiebigem Material bestehendes, durch eine Längsbewehrung mindestens im Bereich der Stoßlücke zwischen den zu verbindenden Rohrstücken biegungssteifes Zwischenstück den Innenwänden der Rohrstücke unter der Wirkung des in den Rohren herrschenden Überdruckes von darin strömenden Flüssigkeiten oder Gasen an.

Es ist das Ziel der vorliegenden Erfindung, einen Verbinder der eingangs genannten Art derart weiter zu entwickeln, daß er in einfacher Weise beliebige, nicht notwendigerweise unter einem inneren Überdruck stehende Rohre oder rohrartige Hohlprofile ohne Störung der glatten Außenform dieser Profile zu verbinden vermag. Die mechanische Festigkeit der Verbindungsstelle soll dabei etwa der mechanischen Festigkeit der übrigen Profilteile entsprechen. Solche Verbinder werden u.a. für die Verbindung der Handlaufstücke eines Treppengeländers oder der Profilteile eines demontierbaren Bäugerüstes benötigt. Ferner finden sie bei Wandhandläufen in Sicherheitsabsperrungen und bei Balkonverkleidungen Anwendung.

Gemäß der Erfindung wird die gestellte Aufgabe durch die imm kennzeichnenden Teil von Anspruch 1 aufgeführten Merkmale gelöst. Einzelheiten der Erfindung ergeben sich aus den Unteransprüchen und der Beschreibung, worin im folgenden anhand der Zeichnung einige Ausführungsbeispiele erörtert werden. Dabei zeigt

Fig. 1 einen Schnitt durch einen erfindungsgemäßen Verbinder,

Fig. 2 die perspektivische Darstellung des in Fig. 1 gezeigten Verbinders bei Anwendung an einem kreisrunden Rohrstück,

Fig. 3 einen Verbinder, dessen Klemmbacken an einem Führungsblech geführt sind, und die

Fig. 4 und 5 mittels eines Doppelsteges verbundene Klemmbacken.

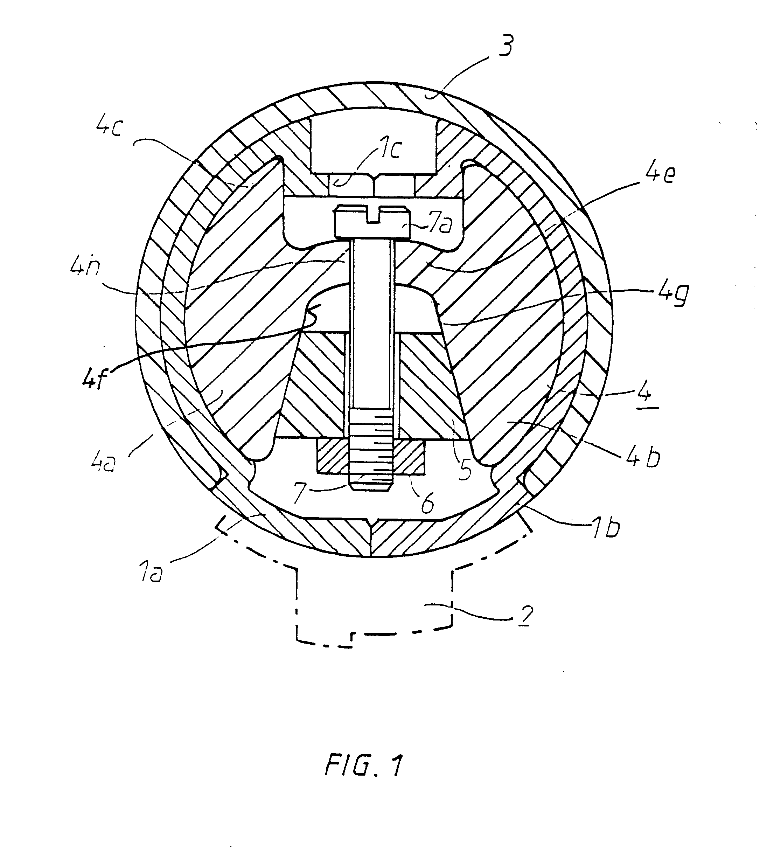

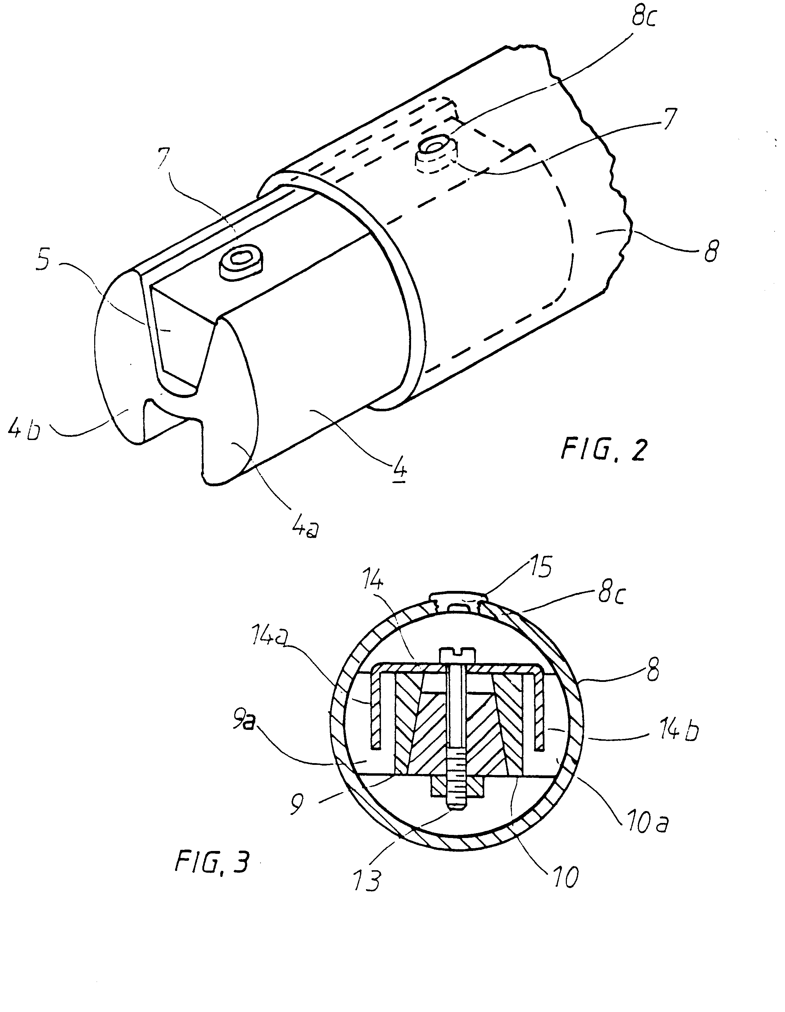

Gemäß den Figuren 1 und 2 ist ein Hohlprofil für den Handlauf eines Geländers aus zwei Teilen 1a und 1b zusammengesetzt. Der Handlauf ist in der üblichen Weise an in der Figur gestrichelt eingezeichneten Stützen 2 befestigt. Im oberen Bereich des Handlaufes sind die in Längsrichtung und am Umfang entstehenden Stoßstellen mittels eines Überzuges 3 überbrückt. Der Überzug 3 besteht aus einem elastischen Kunststoff, welcher dem Hohlprofil 1a, 1b unter eigener Federwirkung fest anliegt, und welcher der auf dem Handlauf gleitenden Hand eine angenehme Berührungsfläche bietet.

Der den Innenwänden des Hohlprofils 1a, 1b anliegende Verbinder wird von einem einzigen Kunststoffteil 4 gebildet, welches in zwei durch einen dünnen Steg 4e verbundene Klemmbacken 4a und 4b aufgeteilt ist. Die Klemmbacken 4a und 4b liegen mit ihren kreisrunden Außenflächen 4c und 4d kreisrunden Innenwandstücken des Hohl profiles 1a, 1b an. Natürlich könnten die Klemmbacken 4a und 4b auch eine andere der Innenform der zu verbindenden Profilstücke angepaßte Außenform aufweisen, wobei jedoch aus Gründen einer optimalen Kraftverteilung zu einer Spiegelachse der Klemmbacken symmetrische Profilformen zu bevorzugen sind.

Die Klemmbacken 1a und 1b sind vorzugsweise aus einem thermoplastischen Kunststoff, wie Polyamid oder Polyvinylchlorid, gefertigt, welcher auch bei langer Dauerbelastung formbeständig ist. Einstückig mit den Klemmbacken ist ein dünner Steg 4e ausgebildet, der eine nach außen gewölbte Form aufweist. Der Steg 4e, welcher aufgrund seines relativ dünnen Querschnittes, seiner gewölbten Form und aufgrund der Elastizität des verwendeten Materials ein großes Maß an Relativ-bewegung zwischen den Klemmbacken 4a, 4b zuläßt, bildet eine Führungseinrichtung für die beiden Klemmbacken, welche sie vor der Montage des Verbinders 4 in der für die Montage erforderlichen räumlichen Zuordnung hält und nach der Montage ein Auseinanderfedern der Klemmbacken in Radialrichtung der zu verbindenden Hohlprofile im erforderlichen Maße gestattet. Bei den in den Figuren 1, 2, 4 und 5 gezeigten Ausführungsbeispielen dient der gewölbte Steg außerdem der Einleitung der Radialkraft in die Klemmbacken.

Die dem Steg 4e anschließenden Innenseiten 4f und 4g der Klemmbacken 4a und 4b sind keilförmig gegeneinander geneigt und umschließen einen mit in derselben Weise geneigten Außenflächen versehenen Keil 5, welcher vorzugsweise ebenfalls aus einem thermoplastischen Kunststoff gefertigt ist. In den Keil 5 ist ein aus Metall bestehendes Einschlagnietgewinde 6 eingedrückt, in welches eine Kopfschraube 7 eingeschraubt ist. Das Einschlagnietgewinde 6 ist mittels einer Klebung oder einer Ultraschallschweißung gegen ein Durchdrehen oder Durchziehen gesichert. Der Schraubenkopf 7a der Kopfschraube 7 ist durch den Steg 4e gesteckt. Vor Anbringung des Überzuges 3 ist sein Schraubenschlitz durch die Öffnung 1c des Hohlprofiles 1a, 1b zugänglich.

Wie aus Fig. 2 ersichtlich ist, welche den in Fig. 1 gezeigten Verbinder in Anwendung auf ein kreisrundes Rohrprofil 8 zeigt, ist der Verbinder 4 jeweils zur Hälfte in die stumpf aneinanderstoßenden Enden der zu verbindenden Profilteile gesteckt, wobei für jedes Profilende mindestens eine Kopfschraube 7 vorgesehen ist, welche durch je eine am Profilende angebrachte Öffnung 8c zugänglich ist.

Im Falle der Verbindung eines für ein Geländer bestimmten Handlaufes mit etwa 40-50 mm Gesamtdurchmesser weist der Verbinder eine Länge von etwa 80-100 mm auf, wobei die Betätigungsschrauben 7 und die dazugehörigen Betätigungsöffnungen 8c etwa 15 mm vom jeweiligen Profilende entfernt sind.

Zum Herstellen der Verbindung werden die Betätigungsschrauben 7 mittels eines durch die Öffnungen 8c gesteckten Schraubenziehers angezogen, wodurch auf den Keil 5 eine quer zur Radialrichtung des Profiles 1, 1b gerichtete Kraft ausgeübt wird, welche die Klemmbacken 4a und 4b in Radialrichtung des Profiles auseinander zu spreizen sucht. Die Klemmbacken 4a, 4b legen sich dadurch fest an die Innenflächen des Profiles an und stellen eine stabile Verbindung zwischen den zu verbindenden Profilenden und dem Verbinder her.

Die Gegenkraft für das Aufbringen der auf den Keil 5 wirkenden Anzugskraft wird durch den dem Steg 4e anliegenden Schraubenkopf 7a erzeugt. Dadurch, daß der Steg 4e entgegen der Zugrichtung der Kopfschraube 7 hochgewölbt ist, entfaltet er unter dem Schraubenzug eine kniehebelartige Wirkung, welche ebenfalls eine starke, nach außen gerichtete Kraft in die Klemmbacken 4a und 4b einleitet. Diese Kraft ergänt die vom Keil 5 auf die Klemmbacken 4a, 4b ausgeübte Kraft zu einer etwa symmetrisch bzw. mittig an den Klemmbacken 4a, 4b angreifenden Radialkraft. Infolge dieses symmetrischen Kraftangriffes und aufgrund der Tatsache, daß auch die zum Anziehen der Kopfschraube 7 erforderliche Gegenkraft mittels des Steges 4e in eine nach außen gerichtete Radialkraft umgewandelt wird, ergibt sich eine optimale Ausnutzung der mittels der Betätigungsschrauben 7 in den Verbinder einleitbaren Kräfte zur Verbindung der beiden Hohlprofile 1a, 1b bzw. der Enden des Rohrprofiles 8.

Gemäß Fig. 3 werden die Enden eines Rohrprofiles 8 mittels zweier Klemmbacken 9 und 10 miteinander verbunden, welche unter der Wirkung einer durch einen Keil 12 gesteckten, in eine Schraubenmutter 11 eingeschraubten Zugschraube 13 einem Führungsblech 14 anliegen. Zwei hochgestellte Lappen 14a und 14b, welche in je eine Ausnehmung 9a bzw. 10a de Klemmbacken 9 und 10 greifen, verhindern dabei ein Auseinanderfallen der Klemmbacken 9 und 10 vor der Montage des Verbinders. Die Durchgriffsöffnung 8c ist in diesem Falle mittels eines Verschlußstopfens 15 nach außen gegen das Eindringen von Feuchtigkeit oder Schmutz abgeschlossen.

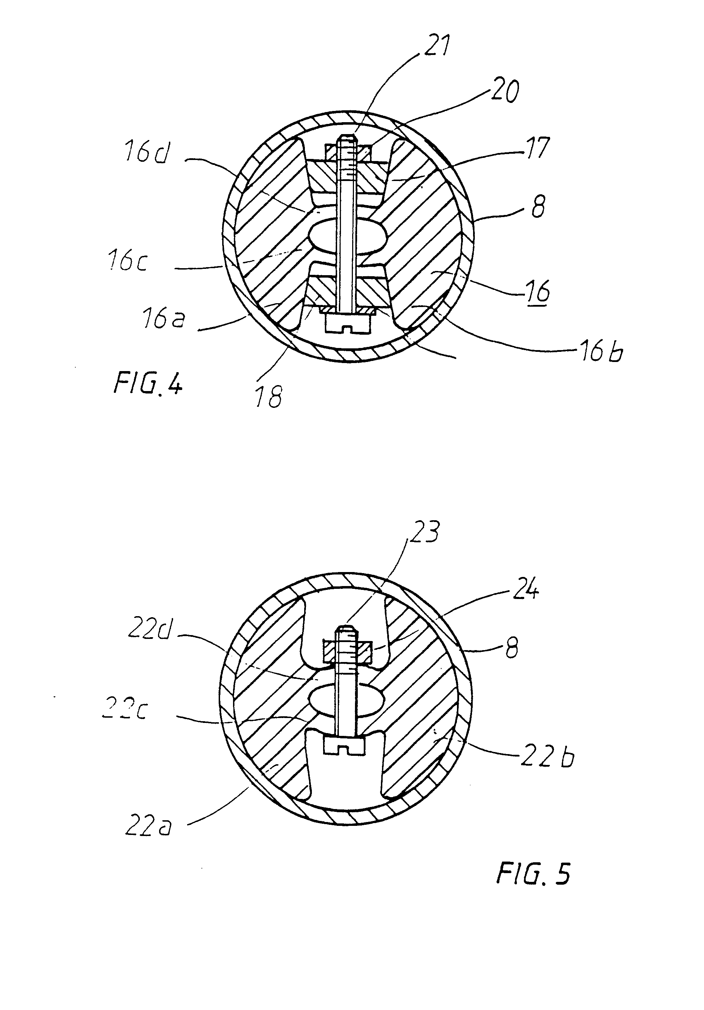

Gemäß Fig. 4 weist ein Verbindungsstück 16 zwei Klemmbacken 16a und 16b auf, welche durch einen einstückig mit den Klemmbacken ausgeführten Doppelsteg 16c, 16d miteinander verbunden sind. Dieser Doppelsteg bietet eine relativ stabile Verbindung der unmontierten Klemmbacken und setzt trotzdem der Radialbewegung der Klemmbacken nur einen relativ geringen Widerstand entgegen.

Die Spreizung der Klemmbacken 16a und 16b erfolgt in diesem Fall mittels zweier gegeneinander wirkender Keile 17 und 18, wodurch wie im Falle der Anordnung gemäß den Figuren 1 und 2, ein symmetrischer Kraftangriff und eine volle Ausnutzung der mittels einer Schraube aufgebrachten Spreizkraft erzielt wird. Die Spreizkraft wird dabei mittels einer durch die Keile 17 und 18, eine Beilagscheibe 19, die Stege 16c und 16d gesteckten, in eine Schraubenmutter 20 eingeschraubten Zugschraube 21 erzeugt, deren Schraubenkopf durch die Öffnung 8c des Rohrprofiles 8 zugänglich ist.

Im Falle der Figur 5 wird die auf die Klemmbacken 22a und 22b eines Verbindungsstückes 22 wirkende Radialkraft dadurch erzeugt, daß eine Zugschraube 23 durch einen die Klemmbacken verbindenden Doppelsteg 22c, 22d gesteckt und in eine Schraubenmutter 24 eingeschraubt ist. Die gesamte Klemmkraft entsteht dabei durch die Kniehebelwirkung des entgegen dem Schraubenzug verwölbten Doppelsteges.

Durch Lösen der Schrauben und Ausüben eines leichten Druckes auf die Schrauben in vertikaler Richtung kann der Keil jeweils gelöst werden. Ist dagegen ein Erhöhen der Spannung erforderlich, so ist dies ohne weiteres durch Anziehen der Schrauben möglich.

**Ansprüche**

1. Verbinder für Rohre oder rohrartige Hohlprofile, welcher die stumpf aneinanderstoßenden Enden zweier gleichartiger Profile mittels eines den Profilwänden beider Enden von innen anliegenden Zwischenstückes verbindet, **dadurch gekennzeichnet,** daß das Zwischenstück von mittels einer Führungseinrichtung (4e, 14, 16c, 16d, 22c, 22d) miteinander verbundenen, in Ra dialrichtung des Profiles (1a, 1b, 8) relativ zueinander beweglichen Klemmbacken (4a, 4b, 9, 10, 16a, 22a, 22b) gebildet wird, und daß eine mittels eines durch Durchgriffsöffnungen (1c, 8c) der Profilwand betätigbaren Schraubgetriebes -(7, 13, 21, 23) angetriebene Bewegungseinrichtung zur Einleitung einer Radialbewegung in die Klemmbacken (4a, 4b, 9, 10, 16a, 16b, 22a, 22b) vorgesehen ist.

2. Verbinder nach Anspruch 1, dadurch gekennzeichnet, daß zwei einander gegenüberliegende Klemmbacken (4a, 4b, 9, 10, 16a, 16b) mit ihren Innenseiten mindestens einem zwischen den Klemmbacken angeordneten Keil (5, 12, 17, 18) anliegen, welcher mittels mindestens je einer im Bereich der Profilenden angeordneten, an der Führungseinrichtung (4e, 14) oder an einem Gegenkeil (17, 18) abgestützten Kopfschraube (7, 13, 21) quer zur Zugrichtung der Kopfschraube bewegbar ist, und daß die Profilenden mit die Schraubenköpfe freigebenden Durchgriffsöffnungen (1c, 8c) versehen sind.

3. Verbinder nach Anspruch 1 oder 2, dadurch gekennzeichnet, daß die Klemmbacken (4a, 4b, 16a, 16b, 22a, 22b) aus Kunststoff bestehen, und daß die Führungseinrichtung von mindestens einem einstückig mit den Klemmbacken ausgeführten, dünnen Steg (4e, 16c, 16d, 22c, 22d) gebildet wird.

4. Verbinder nach Anspruch 3, dadurch gekennzeichnet, daß der Steg (4e, 16c, 16d, 22c, 22d) eine entgegen die Zugrichtung einer Betätigungsschraube (7, 21, 23) gerichtete Wölbung aufweist.

5. Verbinder nach Anspruch 4, dadurch gekennzeichnet, daß eine Betätigungsschraube (7) mit ihrem Gewindeteil in den Keil (5, 6) eingeschraubt ist und sich mit ihrem Kopfteil (7a) am hochgewölbten Steg (4e) abstützt.

6. Verbinder nach Anspruch 3, dadurch gekennzeichnet, daß die Klemmbacken (16a, 16b, 22a, 22b) mittels eines etwa mittig zwischen ihnen angeordneten Doppelsteges (16c, 16d, 22c, 22d) miteinander verbunden sind, dessen Hälften relativ zueinander nach außen verwölbt sind.

7.Verbinder nach Anspruch 6, dadurch gekennzeichnet, daß zwei zu beiden Seiten des Doppelsteges (16c, 16d) angeordnete Keile (17, 18) vorgesehen sind, welche durch eine Betätigungsschraube (21) miteinander verbunden sind.

8. Verbinder nach Anspruch 6, dadurch gekennzeichnet, daß die beiden Hälften des Doppelsteges (22c, 22d) durch eine Zugschraube (23) miteinander verbunden sind.

9. Verbinder nach Anspruch 1, dadurch gekennzeichnet, daß die Führungseinrichtung von einem unter der Wirkung einer Zugschraube (13) den beiden Klemmbacken (9, 10) anliegenden Führungsblech (14) gebildet wird, welches Begrenzungsanschläge (14a, 14b) für die Auswärtsbewegung der Klemmbacken trägt.

10. Verbinder nach einem der vorhergehenden Ansprüche, dadurch gekennzeichnet, daß in den Keil (5) ein Einschlagnietgewinde (6) eingesetzt ist.

11. Verbinder nach Anspruch 10, dadurch gekennzeichnet, daß das Einschlagnietgewinde (6) mittels einer Klebung oder Ultraschallschweißung gegen Verdrehen und/oder Durchziehen gesichert ist.

12. Verbinder nach einem der vorhergehenden Ansprüche, dadurch gekennzeichnet, daß die Durchgriffsöffnung (8c) mittels eines Verschlußstopfens (15) verschlossen ist.

FIG. 1

FIG. 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 514 135 (COOPER)<br>* Insgesamt * | 1,2 | F 16 B 7/04 |
| A | | 7,8 | |
| | --- | | |
| X | FR-A-1 562 522 (RONEO)<br>* Figuren 2,3 * | 1,2 | |
| A | | 7,8 | |
| | --- | | |
| A | FR-A-1 367 425 (T.I.A.C.)<br>* Figuren * | 1,2 | |
| | --- | | |
| A | DE-C- 551 720 (MARSHALL)<br>* Figuren 2,7,8 * | 1 | |
| | --- | | RECHERCHIERTE SACHGEBIETE (Int. Cl.4) |
| A | US-A-2 850 304 (WAGNER)<br>* Figuren 1,4 * | 1,2 | F 16 B<br>F 16 L<br>E 04 F<br>E 04 G |
| | --- | | |
| A | FR-A-1 175 966 (CHAIGNEAU)<br>* Figuren 2,3,7,8 * | 1 | |
| | ----- | | |

Der vorliegende Recherchenbericht wurde für alle Patentansprüche erstellt.

| Recherchenort<br>DEN HAAG | Abschlußdatum der Recherche<br>27-08-1986 | Prüfer<br>SCHAEFFLER C.A.A. |
|---|---|---|